# EUROPÄISCHE PATENTSCHRIFT

(11) **EP 0 724 785 B1**
(45) Veröffentlichungstag und Bekanntmachung des Hinweises auf die Patenterteilung: **29.07.1998**
(21) Anmeldenummer: 94930965.2
(22) Anmeldetag: 21.10.1994
(51) Int. Cl.: H02B 1/30

(54) **RAHMENGESTELL FÜR EINEN SCHALTSCHRANK**
RACK FOR SWITCHING CABINETS
BAIE POUR ARMOIRES DE DISTRIBUTION

(30) Priorität: 23.10.1993 DE 4336204
(43) Veröffentlichungstag der Anmeldung: 07.08.1996
(73) Patentinhaber: Rittal-Werk Rudolf Loh GmbH & Co. KG, 35745 Herborn (DE)
(72) Erfinder: BESSERER, Horst, D-35745 Herborn (DE); MÜNCH, Udo, D-35764 Sinn (DE); NEUHOF, Markus, D-35630 Ehringshausen (DE); NICOLAI, Walter, D-35418 Buseck (DE); PAWLOWSKI, Adam, D-35690 Dillenburg (DE); SCHÜLER, Matthias, D-35716 Dietzhölztal (DE); STRACKBEIN, Heinrich, D-35444 Biebertal (DE)
(74) Vertreter: Fleck, Hermann-Josef, Dr.-Ing.
(86) Internationale Anmeldenummer: EP9403461
(87) Internationale Veröffentlichungsnummer: WO9511536

(56) Entgegenhaltungen:
- EP-A- 0 262 599
- EP-A- 0 533 555
- DE-A- 3 917 985
- DE-A- 4 227 532
- FR-A- 2 615 684

## Beschreibung

Die Erfindung betrifft ein Rahmengestell für einen Schaltschrank, das aus Rahmenschenkel zusammengesetzt ist und Befestigungsaufnahmen aufweist, die in Innenkanten des Rahmengestelles bildende Seiten der Rahmenschenkel eingebracht sind.

Ein Rahmengestell dieser Art ist aus der EP A 0 262 599 bekannt. Bei diesem bekannten Rahmengestell wird ein Traggestell aus Rahmenschenkeln gebildet. In dem Rahmengestell sind senkrecht verlaufende Montageschienen angebracht, die an Befestigungsbohrungen der oberen und unteren horizontalen Rahmenschenkel, beispielsweise in den Eckbereichen angebracht sind. Zwar zeigen die vertikalen Rahmenschenkel zum Innern des Rahmengestells gerichtete Profilabschnitte. An diesen kommen die Montageschienen wegen der Befestigung an den oberen und unteren horizontalen Rahmenschenkel aber nicht zur Anlage, sondern sind von diesen aufgrund des Profilquerschnitts der Rahmenschenkel beabstandet. Die Beabstandung oder Zurücksetzung hat den Sinn, daß Einbauteile direkt ohne Behinderung durch die Türen an den Montageschienen angebracht werden können. Die Montageschienen weisen mehrere voneinander weggerichtete Profilschenkel auf, wodurch das Profil relativ aufwendig ist.

In der DE 39 17 985 A1 ist ein Rahmengestell für einen Schaltschrank gezeigt, bei dem an den Rahmenschenkeln L-förmige Trägerschienen angebracht sind. Ein Schenkel der Trägerschienen ragt dabei in das Innere des Rahmengestells und weist Befestigungsaufnahmen auf, an denen weitere Montageschienen anbringbar sind. Die Trägerschienen lassen wegen der nur an einem der L-Schenkel anbringbaren Montageschienen nur eine eingeschränkte Anordnung von Einbauteilen zu, sofern nicht zusätzliche Montageschienen verwendet werden.

Die FR-A-2 615 684 gibt ein Rahmengestell für einen Schaltschrank an, bei dem parallel zu den oberen und unteren seitlichen horizontalen Rahmenschenkeln U-förmige Trageschienen vorgesehen sind. Diese Trageschienen sind mit einem Endbereich an einer zum Innern des Rahmengestells gekehrten Fläche jedes entsprechenden vertikalen Rahmenschenkels festgelegt. Auch diese Trageschienen allein lassen nur eine begrenzte Anbringbarkeit von Einbauteilen zu.

Ein weiteres Rahmengestell ist aus der DE 33 44 598 C1 bekannt. Dabei weisen die Rahmenschenkel selbst die zwei Profilseiten mit den Reihen von Befestigungsaufnahmen auf. Die Herstellung der Rahmenschenkel umfaßt mit dem Einbringen der Befestigungsaufnahmen und dem Profilieren des gestanzten Blechzuschnittes mehrere Arbeitsgänge, die sich in sehr hohen Herstellkosten niederschlagen. Außerdem sind alle Rahmenschenkel des Rahmengestelles mit den Reihen von Befestigungsaufnahmen versehen, um an allen Stellen des Rahmengestelles Befestigungsmöglichkeiten vorzusehen, obwohl dies in vielen Fällen gar nicht erforderlich ist. Da die Reihen von Befestigungsaufnahmen zudem in einer einheitlichen Teilung eingebracht sind, werden öfters für den Einbau von Sondereinrichtungen besondere Befestigungsmittel erforderlich.

Es ist Aufgabe der Erfindung, ein Rahmengestell der eingangs erwähnten Art zu schaffen, das mit einfacheren, kostengünstig herstellbaren Rahmenschenkeln aufgebaut werden kann und dennoch auch nachträglich an die unterschiedlichsten Befestigungsmöglichkeiten angepaßt werden kann.

Diese Aufgabe wird nach der Erfindung durch die Merkmale des Anspruchs 1 gelöst.

Das Rahmengestell wird im Grundausbau als reines Traggestell ausgebildet, wozu einfache, kostengünstig herstellbare Rahmenschenkel verwendet werden können. Mit Hilfe der Montageschienen kann an den erforderlichen Stellen das Traggestell für den Einbau vDn Einrichtungen ausgerüstet werden, was auch nachträglich möglich ist. Dabei lassen sich mit Montageschienen mit unterschiedlichen Befestigungsaufnahmen auch unterschiedliche Teilungen in ein und demselben Rahmengestell realisieren oder die Teilung der Befestigungsaufnahmen kann nachträglich durch den Einbau anderer Montageschienen auch wieder geändert werden. Das so aufgebaute Rahmengestell bietet daher wesentlich mehr Variationsmöglichkeiten als das bekannte Rahmengestell. Außerdem kann das Traggestell auch mit individuellen Montageschienen versehen werden.

Die Verbindung der Montageschienen mit den Rahmenschenkeln des Traggestelles wird dadurch erleichtert, daß die Rahmenschenkel jeweils eine durch zwei Profilseitenabschnitte begrenzte Aufnahme aufweisen, in die die Montageschiene so einsetzbar ist, daß die mit den Befestigungsaufnahmen versehenen Profilseiten Innenseiten des Traggestelles bilden.

Ist nach einer Ausgestaltung vorgesehen, daß jeweils vier Rahmenschenkel des Traggestelles zu zwei unlösbaren Tragrahmen verbunden sind, und daß die beiden Tragrahmen in den Eckbereichen mittels vier als Verbindungsstreben ausgebildeten Rahmenschenkeln lösbar miteinander verbunden oder verbindbar sind, dann kann das Rahmengestell zerlegt raumsparend gelagert und versandt werden.

Besonders kostengünstig kann das Rahmengestell dann hergestellt werden, wenn vorgesehen ist, daß die Rahmenschenkel des Traggestelles als offene Hohlprofilabschnitte ausgebildet sind, die vorzugsweise aus Blechzuschnitten abgekantet sind.

Nach einer vorteilhaften Weiterbildung ist vorgesehen, daß die Montageschienen als offene oder geschlossene Hohlprofilabschnitte ausgebildet sind, die in zwei Profilseiten mit Befestigungsaufnahmen versehen sind, und daß die die Aufnahme für die Montageschiene bildenden Profilseitenabschnitte der Rahmenschenkel des Traggestelles an Profilseiten der Montageschienen anliegen. Die Montageschienen nehmen bei der Verbindung mit den Rahmenschenkeln des Traggestelles dann stets eine definierte Stellung ein.

Um eine universelle Befestigungsmöglichkeit an allen Rahmenschenkeln des Traggestelles zu erhalten, ist nach einer Ausgestaltung vorgesehen, daß die Montageschienen zu einem Montagegestell zusammengesetzt oder zusammensetzbar sind.

Zur Vereinfachung der Montage des Montagegestelles ist die Ausgestaltung so, daß das Montagegestell aus zwei unlösbaren Montagerahmen und vier Verbindungsstreben bildende Montageschienen zusammengesetzt oder zusammensetzbar ist.

Die Rahmenschenkel des Traggestelles weisen in vorteilhafter Weise identischen Querschnitt auf. Dasselbe gilt auch für die Montageschienen des Montagegestelles, wobei die Montageschienen jedoch gleiche und/oder unterschiedliche Reihen von Befestigungsaufnahmen aufweisen können.

Eine raumsparende Lagerung und Lieferung eines Rahmengestelles bei reduzierter Montagearbeit am Einsatzort wird nach einer Ausgestaltung dadurch erreicht, daß ein Tragrahmen des Traggestelles und ein Montagerahmen des Montagegestelles jeweils zu einer Einheit zusammengesetzt oder zusammensetzbar ist und daß ein als Verbindungsstrebe ausgebildeter Rahmenschenkel des Traggestelles mit einer Montageschiene zu einer Einheit zusammengesetzt oder zusammensetzbar ist.

Ist ein Rahmengestell erwünscht, das z.B. aus Gründen der erleichterten Bedienung von Einbauten eine geneigte Seite aufweisen soll, dann ist die Ausgestaltung so vorgenommen, daß die als Verbindungsstreben verwendeten Rahmenschenkel des Traggestelles und die als Verbindungsstreben verwendeten Montageschienen des Montagegestelles paarweise unterschiedliche Länge aufweisen.

Die Tragrahmen des Traggestelles sind nach einer Ausgestaltung identisch ausgebildet, wobei die Rahmenschenkel fest miteinander verschweißt sind. Damit wird eine ausgezeichnete Stabilität und Verwindungssteifigkeit erreicht. Auch die Montagerahmen des Montagegestelles sind nach einer Ausgestaltung identisch ausgebildet, wobei die Montageschienen fest miteinander verschweißt sind.

Die Erfindung wird anhand von in den Zeichnungen dargestellten Ausführungsbeispielen näher erläutert. Es zeigen:
- Fig. 1: in perspektivischer Ansicht ein aus Rahmenschenkeln zusammengesetztes Traggestell, an dessen vertikalen Rahmenschenkeln Montageschienen anbringbar sind,
- Fig. 2 und 3: perspektivische Teilansichten der Bereiche II und III des Traggestelles nach Fig. 1, die den Anbau einer Montageschiene an einem mit einer Aufnahme versehenen Rahmenschenkel erkennen läßt,
- Fig. 4: in perspektivischer Montagestellung zwei Einheiten aus einem Tragrahmen mit angebrachtem Montagerahmen und vier als Verbindungsstreben verwendeten Einheiten aus Rahmenschenkel und Montageschiene,
- Fig. 5: eine perspektivische Teilansicht des Bereiches V der Fig. 4,
- Fig. 6: in perspektivischer Ansicht ein zusammengesetztes Montagegestell, an dem zwei Tragrahmen und vier Rahmenschenkel des Traggestelles anbringbar sind, und
- Fig. 7: eine perspektivische Teilansicht des Bereiches VII der Fig. 6.

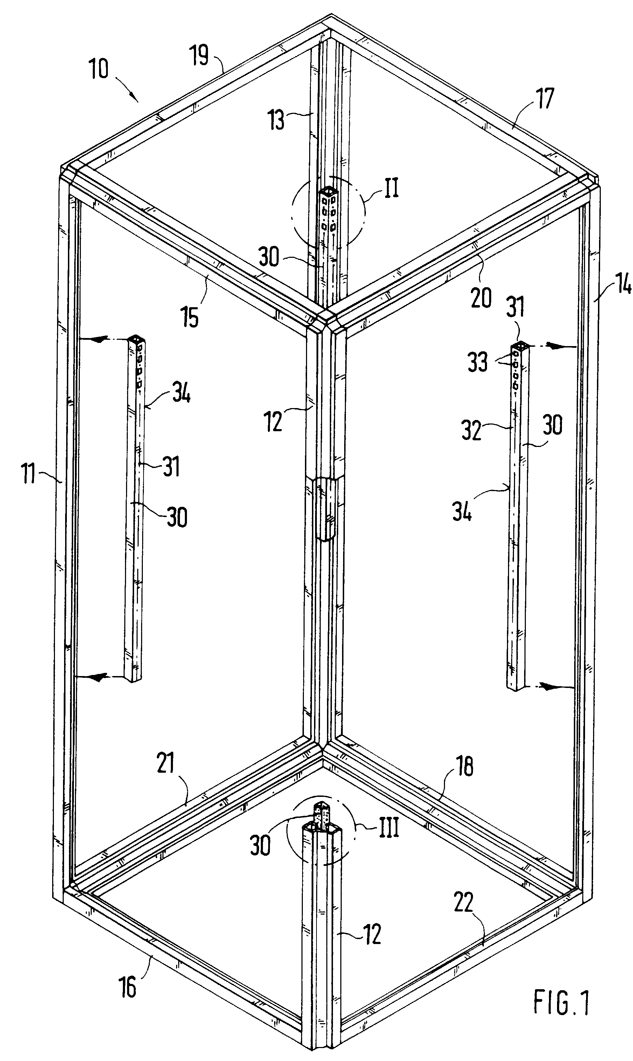

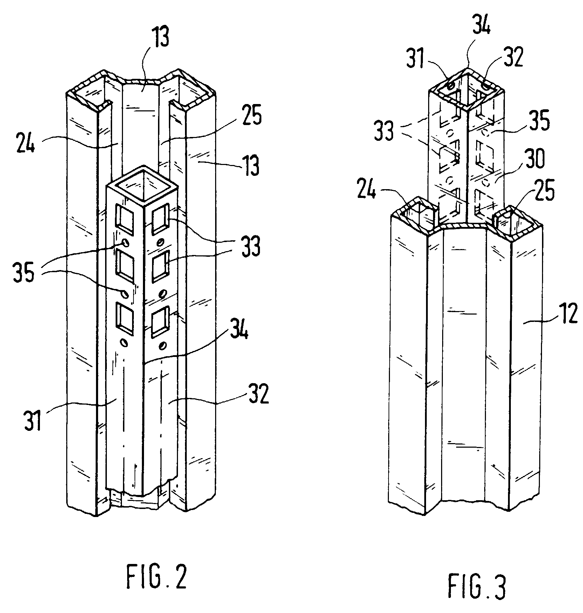

Wie die Fig. 1 erkennen läßt, ist bei dem Rahmengestell nach der Erfindung die Tragfunktion und die Befestigungsfunktion getrennt. Aus vorzugsweise Rahmenschenkeln 11 bis 22 identischen Querschnitts wird ein Traggestell 10 zusammengesetzt, das die Tragfunktion des Rahmengestelles übernimmt. Auf den zum Innenraum des Traggestelles 10 gerichteten Seiten der Rahmenschenkel der vertikalen Rahmenschenkel 11, 12 13 und 14 werden Montageschienen 30 befestigt, z.B. angeschraubt, angenietet oder angeschweißt. Diese Montageschienen 30 erstrecken sich über einen Teil der Länge der vertikalen Rahmenschenkel 11,12, 13 und 14 und sind an den Stellen angebracht, die für den Einbau von Einrichtungen vorgesehen sind. Diese Montageschienen 30 besitzen im Ausführungsbeispiel zwei senkrecht zueinander stehende Profilseiten 31 und 32, wie die Teilansichten nach Fig. 2 und 3 zeigen. Diese beiden Profilseiten 31 und 32 sind nach der Anbringung an dem zugeordneten Rahmenschenkel 12 bzw. 13 parallel zu den Außenseiten des Traggestelles 10 ausgerichtet, so daß mit der Kante 34 zwischen diesen beiden Profilseiten 31 und 32 ein Teil einer Innenkante des Rahmengestelles gebildet ist. Die Profilseiten 31 und 32 sind mit jeweils einer Reihe von Befestigungsaufnahmen 33 und 35 versehen, die als quadratische oder rechteckförmige Durchbrüche und Bohrungen ausgebildet sein können. Die beiden Reihen der Befestigungsaufnahmen 33 und 35 sind in einer einheitlichen Teilung eingebracht und in den beiden Profilseiten 31 und 32 aufeinander ausgerichtet.

Die Modulschienen 30, die mit dem Traggestell 10 verbunden werden, können auch davon abweichende Befestigungsaufnahmen in anderer Teilung aufweisen. Dies hängt nur davon ab, welche Art von Einrichtungen in das Rahmengestell eingebaut werden sollen. Der Schaltschrank kann auch nur mit dem Traggestell 10 ausgeliefert werden und am Einsatzort können beliebige Montageschienen an den Rahmenschenkeln 11 bis 22 des Traggestelles 10 angebracht werden. Wie die horizontalen Rahmenschenkel 15,16, 17 und 18 sowie die als Verbindungsstreben verwendeten Rahmenschenkel 19,20, 21 und 22 zeigen, kann sich die Anbringung von Montageschienen 30 auch nur auf einen Teil der Rahmenschenkel des Traggestelles 10 beschränken. Die Nachrüstbarkeit der Montageschienen 30 gibt dem neuen Rahmengestell eine wesentlich größere Variations- und Ausbaumöglichkeit.

Wie den Teilansichten nach Fig. 2 und 3 weiterhin zu entnehmen ist, können die Rahmenschenkel des Traggestelles 10 als einfache Biegeteile aus einem Blechzuschnitt gebogen werden und bilden vorzugsweise ein nach innen gerichtetes, offenes Hohlprofil, dessen Profilseitenabschnitte 24 und 25 eine Aufnahme für die z.B. als Vierkanthohlprofilabschnitt ausgebildete Montageschiene 30, die an diesen Profilseitenabschnitten 24 und 25 anliegend mit dem Rahmenschenkel verbunden wird. Dabei stehen die Profilseiten 31 und 32 der Montageschiene 30 in den Innenraum des Traggestelles 10 und bilden mit der Kante 34 einen Teil der Innenkante des Rahmengestelles. Die Rahmenschenkel 11 bis 22 des Traggestelles 10 sind leicht und kostengünstig mit ausreichender Stabilität und Verwindungssteifigkeit herstellbar und bei Bedarf mit geeigneten Montageschienen 30 erweiter- und ausbaubar.

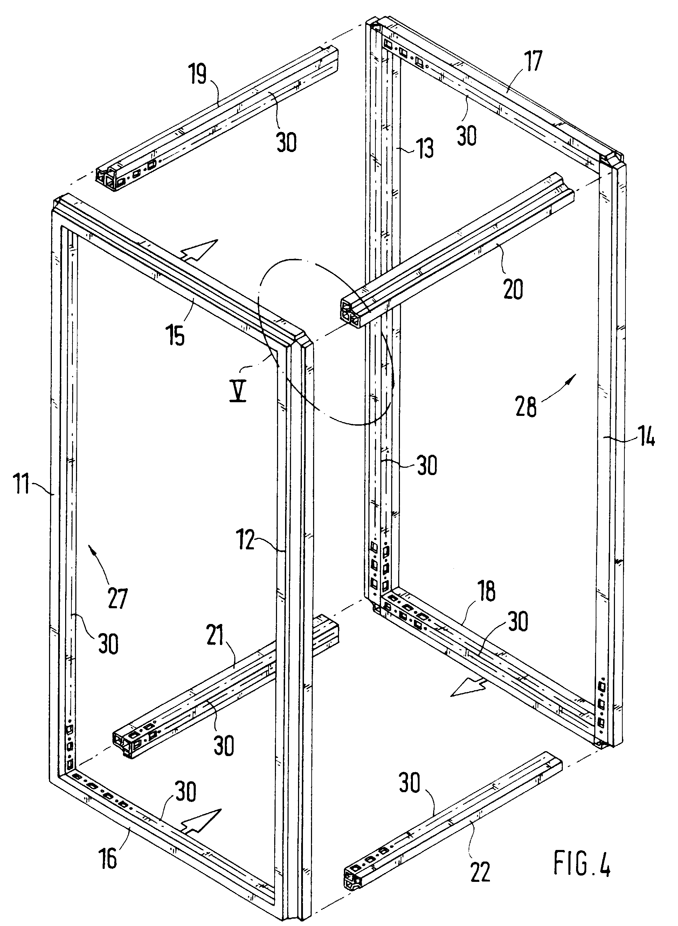

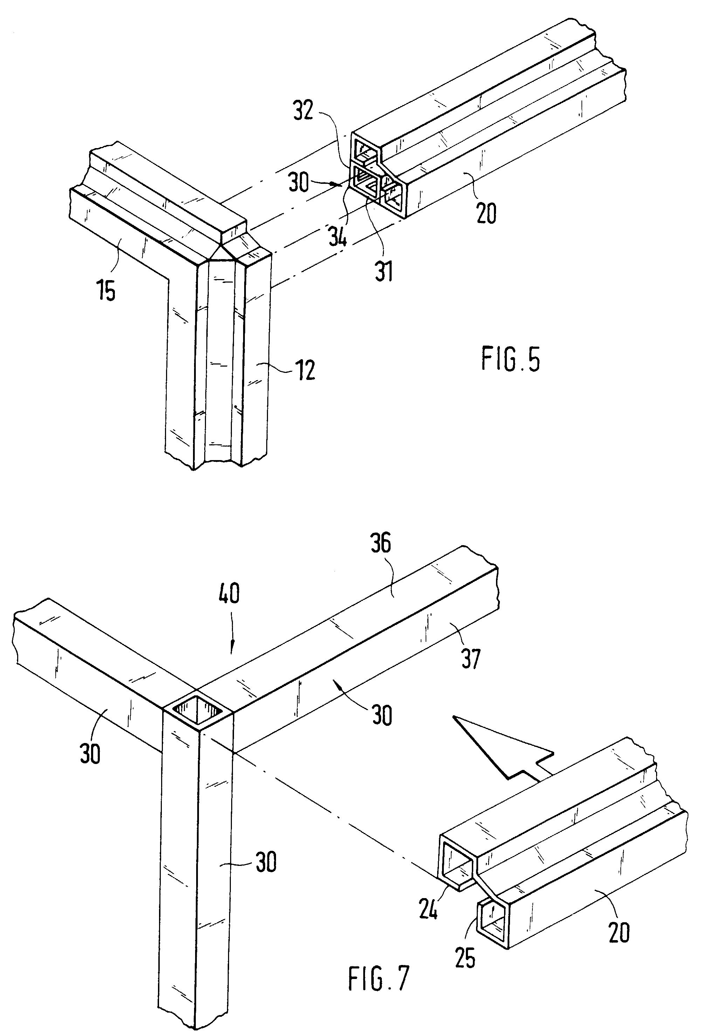

Wie das Ausführungsbeispiel nach Fig. 4 zeigt, können das Traggestell 10 aus den Rahmenschenkeln 11 bis 22 und ein aus zwölf Montageschienen 30 gebildetes Montagegestell auch in anderer Weise zusammengesetzt werden. Die vorderen Rahmenschenkel 11, 12, 15 und 16 bilden einen unlösbaren Tragrahmen 27, an dessen Rahmenschenkel jeweils eine über die gesamte Länge derselben reichende Montageschiene 30 lösbar befestigt ist. In gleicher Weise ist aus den Rahmenschenkeln 13,14, 17 und 18 ein gleicher Tragrahmen 28 zusammengesetzt und mit Montageschienen 30 versehen. Die beiden Tragrahmen 27 und 28 werden an ihren Ecken mittels der als Verbindungsstreben verwendeten Rahmenschenkeln 19,20, 21 und 22 lösbar miteinander verbunden, so daß das Rahmengestell raumsparend gelagert und versandt und am Einsatzort auf einfache Weise zusammengesetzt werden kann. Die Rahmenschenkel 19 bis 22 können dabei mit oder ohne Montageschienen 30 angebracht werden. Anstelle der als Montagerahmen ausgebildeten Montageschienen 30 können an den Tragrahmen 27 und 28 auch nur Montageschienen 30 wie im Ausführungsbeispiel nach Fig. 1 angebracht werden. Wie die Teilansicht nach Fig. 5 zeigt, paßt die Montageschiene 30 bündig in die durch den Rahmenschenkel 20 gebildete Aufnahme, so daß Montageschiene 30 und Rahmenschenkel 20 bündige Innenseiten bilden können.

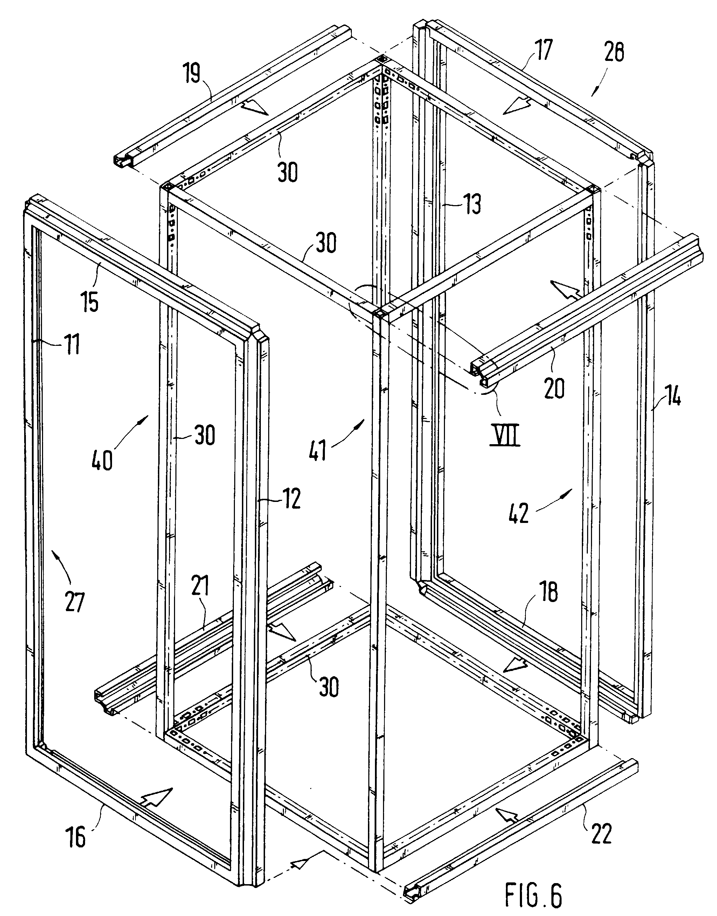

Am Ausführungsbeispiel nach Fig. 6 wird gezeigt, wie ein aus zwölf Montageschienen 30 zusammengesetztes Montagegestell 40 aufgebaut und nachträglich in einem Traggestell 10 aus den Rahmenschenkeln 11 bis 22 festgelegt werden kann. Dies kann auch erst nach dem Einbau von Einrichtungen in das Montagegestell 40 erfolgen.

Das Montagegestell 40 kann aus zwölf Montageschienen 30 z.B. mit Hilfe von Eckverbindern zusammengesetzt werden, oder es können zwei identische Montagerahmen 41 und 42 mit vier als Verbindungsstreben verwendeten Montageschienen 30 zusammengesetzt werden. An das fertiggestellte Montagegestell 40 werden zwei Tragrahmen 27 und 28 sowie vier als Verbindungsstreben verwendete Rahmenschenkel 19,20, 21 und 22 angebracht, wobei die Verbindungen zwischen den Tragrahmen 27 und 28 und den Rahmenschenkeln 19 bis 22 sowie mit dem Montagegestell 40 hergestellt werden. Dabei nehmen die durch die Profilseitenabschnitte 24 und 25 gebildeten Aufnahmen der Rahmenschenkel 11 bis 18 der Tragrahmen 27 und 28 und der als Verbindungsstreben verwendeten Rahmens enkel 19 bis 22 die Montageschienen 30 des Montagegestelles 40 bündig auf, wie die Teilansicht nach Fig. 7 verdeutlicht.

Die neue Ausgestaltung des Rahmengestelles läßt, wie die Ausführungsbeispiele zeigen, auch einen unterschiedlichen Aufbau des Rahmengestelles und damit Einbau der Einrichtungen am Einsatzort zu.

Die Tragrahmen des Traggestelles und die Montagerahmen des Montagegestelles können auch aus vier seitlichen Rahmenschenkeln bzw. Montageschienen zusammengesetzt werden. Auch die unteren bzw. oberen Rahmenschenkel bzw. Montageschienen können mit vertikalen Rahmenschenkeln bzw. Montageschienen zu einem Traggestell bzw. Montagegestell zusammengesetzt werden.

Die Profilseiten der Montageschiene und die Profilseitenabschnitte der Rahmenschenkel des Traggestelles müssen auch nicht unbedingt senkrecht zueinander stehen. Das Traggestell und das Montagegestell können auch mehr oder weniger als zwölf Rahmenschenkel bzw. Montageschienen umfassen.

## Patentansprüche

1. Rahmengestell für einen Schaltschrank, das aus ein Traggestell (10) bildenden Rahmenschenkeln (11 bis 22) zusammengsetzt ist, wobei getrennte, sich in Richtung der Rahmenschenkel (11 bis 22) erstreckende Montageschienen (30) mit den Rahmenschenkeln (11 bis 22) so verbindbar sind, daß sie mit freiliegenden, im rechten Winkel zueinander stehenden und mit Reihen von Befestigungsaufnahmen (33) versehenen Profilseiten (31, 32) in den Innenraum des Traggestelles (10) ragen,
dadurch gekennzeichnet,
daß die zumindest über einen Teil der Länge der zugeordneten Rahmenschenkel (11 bis 22) sich erstreckenden Montageschienen (30) in einer parallel zu diesen verlaufenden, durch zwei Profilseitenabschnitte (24, 25) der Rahmenschenkel (11 bis 22) gebildeten Aufnahme festgelegt sind und
daß die die Reihen von Befestigungsaufnahmen (33) aufweisenden Profilseiten (31, 32) miteinander eine Innenkante (34) des Rahmengestells bilden.

2. Rahmengestell nach Anspruch 1,
dadurch gekennzeichnet,
daß die zwei Profilseitenabschnitte (24, 25) zum Innern der Rahmenschenkel (11 bis 22) abgekantet sind und
daß die Montageschienen (30) bündig in durch die Profilabschnitte (24, 25) gebildeten Aufnahmen so eingepaßt sind,
daß die Montageschienen (30) und die Rahmenschenkel (20) bündige Innenseiten des Rahmengestells bilden.

3. Rahmengestell nach Anspruch 1 oder 2,
dadurch gekennzeichnet,
daß jeweils vier Rahmenschenkel (11, 12, 15, 16 bzw. 13, 14, 17, 18) des Traggestelles (10) zu zwei unlösbaren Tragrahmen (27, 28) verbunden sind und
daß die beiden Tragrahmen (27, 28) in den Eckbereichen mittels vier als Verbindungsstreben ausgebildeter Rahmenschenkel (19, 20, 21, 22) lösbar miteinander verbunden oder verbindbar sind.

4. Rahmengestell nach einem der Ansprüche 1 bis 3,
dadurch gekennzeichnet,
daß die Rahmenschenkel (11 bis 22) des Traggestelles (10) als offene Hohlprofilabschnitte ausgebildet sind, die vorzugsweise aus Blechzuschnitten abgekantet sind.

5. Rahmengestell nach einem der Ansprüche 1 bis 4,
dadurch gekennzeichnet,
daß die Montageschienen (30) als offene oder geschlossene Hohlprofilabschnitte ausgebildet sind, die in zwei Profilseiten (31, 32) mit Befestigungsaufnahmen (33, 35) versehen sind, und
daß die die Aufnahme für die Montageschiene (30) bildenden Profilseitenabschnitte (24, 25) der Rahmenschenkel (11 bis 22) des Traggestelles (10) senkrecht zueinander stehen.

6. Rahmengestell nach einem der Ansprüche 1 bis 5,
dadurch gekennzeichnet,
daß die Montageschienen (30) zu einem Montagegestell (40) zusammengesetzt oder zusammensetzbar sind.

7. Rahmengestell nach Anspruch 6,
dadurch gekennzeichnet,
daß das Montagegestell (40) aus zwei unlösbaren Montagerahmen (41, 42) und vier Verbindungsstreben bildende Montageschienen (30) zusammengesetzt oder zusammensetzbar ist.

8. Rahmengestell nach einem der Ansprüche 1 bis 7,
dadurch gekennzeichnet,
daß die Rahmenschenkel (11 bis 22) des Traggestelles (10) identischen Querschnitt aufweisen.

9. Rahmengestell nach einem der Ansprüche 1 bis 8.
dadurch gekennzeichnet,
daß die Montageschienen (30) einheitlichen Querschnitt und gleiche und/oder unterschiedliche Reihen von Befestigungsaufnahmen (33, 35) aufweisen.

10. Rahmengestell nach Anspruch 3 und 7,
dadurch gekennzeichnet,
daß ein Tragrahmen (27, 28) des Traggestelles (10) und ein Montagerahmen des Montagegestelles (40) jeweils zu einer Einheit zusammengesetzt oder zusammensetzbar ist, und
daß ein als Verbindungsstrebe ausgebildeter Rahmenschenkel (19, 20, 21, 22) des Traggestelles mit einer Montageschiene (30) zu einer Einheit zusammengesetzt oder zusammensetzbar ist.

11. Rahmengestell nach einem der Ansprüche 1 bis 10,
dadurch gekennzeichnet,
daß die als Verbindungsstreben verwendeten Rahmenschenkel (19, 20 bzw. 21, 22) des Traggestelles (10) und die als Verbindungsstreben verwendeten Montageschienen (30) des Montagegestelles (40) paarweise unterschiedliche Länge aufweisen.

12. Rahmengestelle nach einem der Ansprüche 1 bis 11,
dadurch gekennzeichnet,
daß die Tragrahmen (27, 28) des Traggestelles (10) identisch ausgebildet sind, wobei die Rahmenschenkel (11, 12, 15, 16 bzw. 13, 14, 17, 18) fest miteinander verschweißt sind.

13. Rahmenschenkel nach einem der Ansprüche 1 bis 12,
dadurch gekennzeichnet,
daß die Montagerahmen (41, 42) des Montagegestelles (40) identsich ausgebildet sind, wobei die Montageschienen (30) fest miteinander verschweißt sind.

## Claims

1. Framework for a switchgear cabinet, which comprises frame members (11 to 22) forming a bearing framework (10), separate mounting rails (30) extending in the direction of the frame members (11 to 22) and being so connectable to the frame members (11 to 22) that they protrude into the interior of the bearing framework (10) with exposed section sides (31, 32), which extend at right angles to one another and are provided with rows of fastening holes (33), characterised in that the mounting rails (30), which extend at least over a part of the length of the associated frame members (11 to 22), are secured in a receiving means, which extends parallel to said rails and is formed by two section side portions (24, 25) of the frame members (11 to 22), and in that the section sides (31, 32), which have the rows of fastening holes (33), form with one another an inner edge (34) of the framework.

2. Framework according t.o claim 1, characterised in that the two section side portions (24, 25) are angled towards the interior of the frame members (11 to 22), and in that the mounting rails (30) are fitted into receiving means formed by the section portions (24, 25) in such a flush manner that the mounting rails (30) and the frame members (20) form flush internal surfaces of the framework.

3. Framework according to claim 1 or 2, characterised in that every four frame members (11, 12, 15, 16 or respectively 13, 14, 17, 18) of the bearing framework (10) are joined to form two non-detachable bearing frames (27, 28), and in that the two bearing frames (27, 28) are detachably interconnected or interconnectable in the corner regions by means of four frame members (19, 20, 21, 22), which are configured as connecting bars.

4. Framework according to one of claims 1 to 3, characterised in that the frame members (11 to 22) of the bearing framework (10) are configured as open hollow section portions which are preferably angled from sheet metal blanks.

5. Framework according to one of claims 1 to 4, characterised in that the mounting rails (30) are configured as open or closed hollow section side portions which are provided with fastening holes (33, 35) in two section sides (31, 32), and in that the profile section portions (24, 25) of the frame members (11 to 22) of the bearing framework (10) form the receiving means for the mounting rail (30) and extend perpendicularly relative to one another.

6. Framework according to one of claims 1 to 5, characterised in that the mounting rails (30) are combined or are combinable to form a mounting framework (40).

7. Framework according to claim 6, characterised in that the mounting framework (40) is composed or is composable of two non-detachable mounting frames (41, 42) and four mounting rails (30), which form connecting bars.

8. Framework according to one of claims 1 to 7, characterised in that the frame members (11 to 22) of the bearing framework (10) have identical cross-sections.

9. Framework according to one of claims 1 to 8, characterised in that the mounting rails (30) have a uniform cross-section and identical and/or different rows of fastening holes (33, 35).

10. Framework according to claims 3 and 7, characterised in that each bearing frame (27, 28) of the bearing framework (10) and each mounting frame of the mounting framework (40) are combined or combinable to form a respective unit, and in that a frame member (19, 20, 21, 22) of the bearing framework is configured as a connecting bar and is combined or combinable with a mounting rail (30) to form a unit.

11. Framework according to one of claims 1 to 10, characterised in that the frame members (19, 20 or respectively 21, 22) of the bearing framework (10), which are used as the connecting bars, and the mounting rails (30) of the mounting framework (40), which are used as the connecting bars, have different lengths in pairs.

12. Framework according to one of claims 1 to 11, characterised in that the bearing frames (27, 28) of the bearing framework (10) are identically configured, the frame members (11, 12, 15, 16 or respectively 13, 14, 17, 18) being welded firmly together.

13. Framework acccrding to one of claims 1 to 12, characterised in that the mounting frames (41, 42) of the mounting framework (40) are identically configured, the mounting rails (30) being welded firmly together.

## Revendications

1. Structure de cadre pour armoire de distribution, composée de branches de cadre (11 à 22) constituant une charpente de support (10), où des rails de montage (30) séparés, orientés en direction des branches (11 à 22) peuvent être reliés aux branches (11 à 22) de manière telle que par des côtés de profil (31, 32) dégagés, disposés perpendiculairement l'un à l'autre et présentant des rangées de logements de fixation (33), ces rails s'engagent à l'intérieur de la charpente de support (10),
caractérisée
en ce que les rails de montage (30) s'étendant sur au moins une partie de la longueur des branches de cadre associées (11 à 22) sont fixés dans un logement orienté parallèlement aux rails de montage (30) et formé de deux côtés de profil (24, 25) des branches de cadre (11 à 22) et
en ce que les côtés de profil (31, 32) présentant les rangées de logements de fixation (33) forment ensemble une arête intérieure (34) de la structure de cadre.

2. Structure de cadre suivant la revendication 1,
caractérisée
en ce que les deux côtés de profil (24, 25) sont coudés vers l'intérieur des branches de cadre, et
en ce que les rails de montage (30) sont ajustés à fleur dans les logements constitués par les côtés de profil (24, 25) de manière telle que les rails de montage (30) et les branches de cadre (20) constituent des faces intérieures à fleur de la structure de cadre.

3. Structure de cadre suivant la revendication 1 ou 2,
caractérisée
en ce qu'un groupe de quatre branches de cadre (11, 12, 15, 16 ou 13, 14, 17, 18) de la charpente de support (10) sont reliées pour former deux cadres de support (27, 28) connectés en permanence, et
en ce que dans les zones d'angle, les deux cadres de support (27, 29) sont ou peuvent être reliés de manière amovible au moyen de quatre branches de cadre (19, 20, 21, 22) en forme d'entretoises de liaison.

4. Structure de cadre suivant l'une quelconque des revendications de 1 à 3,
caractérisée en ce que les branches de cadre (11 à 22) de la charpente de support (10) ont la forme de tronçons de profilés creux ouverts, qui sont de préférence fabriqués par pliage de flans en tôle.

5. Structure de cadre suivant l'une quelconque des revendications de 1 à 4,
caractérisée en ce que les rails de montage (30) ont la forme de tronçons de profilés creux ouverts ou fermés, présentant des logements de fixation (33, 35) dans deux côtés de profil (31, 32), et
en ce que les côtés de profil (24, 25) des branches de cadre (11 à 22) de la charpente de support (10) qui constituent le logement pour le rail de montage (30) sont perpendiculaires l'un à l'autre.

6. Structure de cadre suivant l'une quelconque des revendications de 1 à 5,
caractérisée en ce que les rails de montage (30) sont ou peuvent être réunis en une charpente de montage.

7. Structure de cadre suivant la revendication 6,
caractérisée en ce que la charpente de montage (40) est ou peut être composée de deux cadres de montage (41, 42) assemblés en permanence et de quatre rails de montage (30) constituant des entretoises de liaison.

8. Structure de cadre suivant l'une quelconque des revendications de 1 à 7,
caractérisée en ce que les branches de cadre (11 à 22) de la charpente de support (10) présentent toutes une section transversale identique.

9. Structure de cadre suivant l'une quelconque des revendications de 1 à 8,
caractérisée en ce que les rails de montage (30) présente une section transversale identique et des rangées de logements de fixation (33, 35) semblables et/ou variables.

10. Structure de cadre suivant les revendications 1 et 7,
caractérisée en ce qu'un cadre de support (27, 28) de la charpente de support (10) et un cadre de montage de la charpente de montage (40) sont ou peuvent être chaque fois réunis en une unité, et
en ce qu'une branche de cadre (19, 20, 21, 22) en forme d'entretoise de liaison de la charpente de support est ou peut être réunie avec un rail de montage (30) pour constituer une unité.

11. Structure de cadre suivant l'une quelconque des revendications de 1 à 10,
caractérisée en ce que les branches de cadre (19, 20 ou 21, 22) de la charpente de support, faisant fonction d'entretoises de liaison, et les rails de montage (30) de la charpente de montage, faisant fonction d'entretoises de liaison, présentent par paires des longueurs différentes.

12. Structure de cadre suivant l'une quelconque des revendications de 1 à 11,
caractérisée en ce que les cadres de support (27, 28) de la charpente de support (10) sont de conception identique, et en ce que les branches de cadre (11, 12, 15, 16 ou 13, 14, 17, 18) sont rigidement réunis par soudage.

13. Structure de cadre suivant l'une quelconque des revendications de 1 à 12,
caractérisée en ce que les cadres de montage (41, 42) de la charpente de montage (40) sont identiques, et en ce que les rails de montage (30) sont réunis rigidement par soudage.
